# EUROPÄISCHE PATENTSCHRIFT

(11) **EP 3 673 567 B1**
(45) Veröffentlichungstag und Bekanntmachung des Hinweises auf die Patenterteilung: **19.01.2022**
(21) Anmeldenummer: 18762468.9
(22) Anmeldetag: 21.08.2018
(51) Int. Cl.: H02K 5/22, H02K 11/33, H02K 7/14, H02K 15/14

(54) **ANSCHLUSSVORRICHTUNG UND ELEKTROMOTOR**
CONNECTING DEVICE AND ELECTRIC MOTOR
DISPOSITIF DE RACCORDEMENT ET MOTEUR ÉLECTRIQUE

(30) Priorität: 23.08.2017 DE 102017214774
(43) Veröffentlichungstag der Anmeldung: 01.07.2020
(73) Patentinhaber: Brose Fahrzeugteile SE & Co. Kommanditgesellschaft, Würzburg, 97076 Würzburg (DE)
(72) Erfinder: WISNER, Marko, 97297 Waldbüttelbrunn (DE); SCHULZ, Janik, 97072 Würzburg (DE); SHENDARE, Keshar, 421012 Pune (IN)
(74) Vertreter: FDST Patentanwälte
(86) Internationale Anmeldenummer: PCT/EP2018/072482
(87) Internationale Veröffentlichungsnummer: WO 2019/038248

(56) Entgegenhaltungen:
- EP-A1- 2 164 153
- WO-A1-2015/059776
- WO-A1-2017/022011
- DE-A1-102013 202 860
- DE-A1-102013 217 993
- DE-U1- 20 022 774
- JP-A- 2010 273 525

## Beschreibung

Die Erfindung betrifft eine Anschlussvorrichtung zum Anschluss eines Leitungssatzes mit einer Anzahl von Leitungen an eine Leiterplatte einer in einem Motorträger eines Elektromotors angeordneten Motorelektronik. Die Erfindung betrifft weiterhin einen Elektromotor mit einer solchen Anschlussvorrichtung und eine Verwendung einer derartigen Anschlussvorrichtung zum Anschluss eines Elektromotors an ein 48V-Versorgungsspannung.

Die vorliegende Erfindung basiert auf den früheren Anmeldungen WO11137950 und WO11137949. Der Inhalt dieser Anmeldungen ist durch Verweis vollwertiger Offenbarungsbestandteil der vorliegenden Anmeldung.

Üblicherweise weist eine mit dem Bordnetz eines Kraftfahrzeugs elektrisch zu verbindende Motorelektronik ein aus deren (Elektronik-)Gehäuse herausgeführtes Anschlussterminal (Anschlussschnittstelle, Motorschnittstelle) als Anschlussvorrichtung auf, deren Anschlusskontakte (Anschlussstellen) untereinander und zur Umgebung hin elektrisch isoliert sind.

Die elektrische Verbindung der Motorelektronik zum Bordnetz erfolgt in der Regel mit einer Anzahl von Leitungen eines in einem Bordnetzkabel geführten Leitungssatzes, dessen eines Kabel- oder Leitungssatzende über eine Steckverbindung verfügt, und dessen anderes Kabel- oder Leitungssatzende elektrisch leitend mit der zu versorgenden Motorelektronik über die Anschlusskontakte des Anschlussterminals verbunden ist. Dieser elektrische Anschluss der einzelnen Leiterenden der Leitungen des Leitungssatzes mit dem Anschlussterminal kann durch eine Schweiß-, Lot-, Klemm- oder Crimpverbindung hergestellt werden.

Eine solche Anschlussvorrichtung ist insbesondere auch bei einem bereits über Anschlussleitungen verfügenden Elektromotor vorgesehen, welcher beispielsweise als Antrieb eines Kühlerlüfters (Kühlerlüftermotor) des Kraftfahrzeuges dient. Der Kühlerlüftermotor wird zur Einstellung der erforderlichen Kühlleistung mittels einer elektrischen oder elektronischen Steuerschaltung der Motorelektronik betrieben. Die Stromversorgung des Kühlerlüftermotors erfolgt über ein Bordnetzkabel, welches an einen Energiespeicher (Fahrzeugbatterie) des Kraftfahrzeugs angeschlossen ist. Der Leitungssatz umfasst hierbei in der Regel zusätzlich zu den Versorgungsleitungen, also dem Plus- und Minuspol der Versorgungsspannung des Energiespeichers oder Bordnetzes, auch Steuer- und/oder Signalleitungen von Sensoren oder übergeordneten Steuereinrichtungen.

Problematisch bei solchen Anschlussvorrichtungen oder elektrischen Motoranschlüssen sind mechanische Belastungen, wie insbesondere Zugbelastungen, zwischen den Leitungssatz enthaltenden Bordnetzkabel und der Anschlussvorrichtung des Elektromotors. Eine solche Zugbelastung kann zu einer Beschädigung und/oder Trennung des elektrischen Kontaktes an der Anschlussvorrichtung oder dem Motoranschluss führen.

Des Weiteren sind Umwelteinflüsse wie Temperaturschwankungen und Feuchtigkeit problematisch, da hierdurch Korrosionen an den Anschlusskontakten der Anschlussvorrichtung auftreten können, welche zu hohen Kontaktwiderständen und/oder einer mechanischen Instabilität (Wackelkontakt) führen können. Ein somit gegebenenfalls auftretender Kurzschluss an der Anschlussvorrichtung kann zu einem Schaden im Bordnetz oder in der Motorelektronik führen. Ferner kann die üblicherweise vorgeschriebene Berührungssicherheit gefährdet werden. Zum Schutz der Motorelektronik ist es hierbei weiterhin wichtig und wünschenswert, dass eine betriebssichere und zuverlässige Abdichtung der Anschlussvorrichtung gegenüber dem Elektronikgehäuse realisiert ist.

Zu diesem Zwecke weist die Motorelektronik typischerweise ein Stanzgitter zur Kontaktierung und Verschaltung von elektronischen Bauteilen, wie beispielsweise einem Elektrolytkondensator oder einer Wechselrichterschaltung, auf. Das Stanzgitter ist hierbei zumindest teilweise als Einlegeteil mit einer Umspritzung versehen, wobei aus der Umspritzung und dem Elektronikgehäuse Leiterbahnen des Stanzgitters als Anschlusskontakte heraus geführt sind. Die Umspritzung des Stanzgitters ermöglicht somit eine zuverlässige Abdichtung des Kabeleingangsbereichs der Anschlussvorrichtung gegenüber dem Elektronikgehäuse, wobei zusätzlich auch eine Zugentlastung realisiert ist.

Nachteiligerweise wird durch die Integration der Abdichtungs- und Zugentlastungsfunktion in das umspritzte Stanzgitter ein Einsatz von Leiterplatten bei der Motorelektronik erschwert oder sogar unmöglich gemacht. Dadurch wird die Flexibilität hinsichtlich der Ausgestaltung und des Aufbaus der Motorelektronik nachteilig eingeschränkt.

In der DE 10 2013 217993 A1 ist eine Leiterplattenanordnung beschrieben, welche eine umspritzte Leiterplatte und einen Motorträger aufweist. Der Motorträger weist zumindest eine Positionierungsausnehmung auf, mit zumindest einem auf der Leiterplattenumspritzung ausgebildeten Positionierungszapfen, welcher sich von der Leiterplattenumspritzung derart abhebt und bezüglich der Positionierungsausnehmung derart angeordnet ist, um bei einem Eingriff des Positionierungszapfens in die Positionierungsausnehmung die Leiterplatte bezüglich des Motorträgers zu positionieren.

Aus der WO 2017/022011 A1 ist ein Elektromotor mit einem ringförmigen Zuleitungsdraht-Verdrahtungsteil, der an einem Ende eines Stators in axialer Richtung angeordnet ist und in dem ein Zuleitungsdraht verdrahtet ist, und mit einem Zuleitungsdraht-Ableitungsteil bekannt. Das Leitungsdraht-Ableitungsteil umfasst ein erstes Element mit einer kontaktlosen Leitungsdrahtoberfläche und einer Leitungsdraht-Kontaktoberfläche, ein zweites Element mit einer fünften Endoberfläche, die der Leitungsdraht-Kontaktoberfläche zugewandt ist und eine sechste Endoberfläche aufweist, und ein drittes Element mit einer siebten Endoberfläche, die der sechsten Endoberfläche zugewandt ist und eine achte Endoberfläche aufweist. Das zweite Glied ist zwischen dem ersten Glied und dem dritten Glied eingeklemmt. Die Leitungsdraht-Kontaktfläche hat eine erste Rille, die den Leitungsdraht hält, die fünfte Endfläche hat eine zweite Rille, die den Leitungsdraht hält, die sechste Endfläche hat eine dritte Rille, und die siebte Endfläche hat einen Vorsprung mit einer Form, die in die dritte Rille passt.

Die JP 2010 273525 A offenbart einen Stator für einen Elektromotor, mit einer Statorbaugruppe und mit einem Substrat, auf dem eine Sensorschaltung zur Positionserfassung ausgebildet ist, sowie mit einer Leitungsdraht-Verdrahtungskomponente und mit einem Leitungsabschnitt der Leitungsdraht-Verdrahtungskomponente.

In der DE 10 2013 202 860 A1 ist ein Verstellantrieb, mit einem Gehäuse, in dem ein Schaltungsträger angeordnet ist, der über elektrische Kontaktierungselemente in Form von als Stanzbiegeteilen ausgebildeten Steckerelementen kontaktierbar ist, beschrieben. Die Steckerelemente sind in einem aus Kunststoff bestehenden, als Spritzgussteil ausgebildeten Anschlußkörper aufgenommen, wobei die Steckerelemente in einen Anschlussstecker mit einem umlaufenden Steckerkragen hineinragen, der dazu eingerichtet ist, mit einem fahrzeugseitigen Gegenstecker kontaktiert werden.

Der Erfindung liegt die Aufgabe zugrunde, eine besonders geeignete Anschlussvorrichtung anzugeben, welche insbesondere einen elektrischen Anschluss eines Bordnetzes an eine Leiterplatte einer Motorelektronik ermöglicht. Der Erfindung liegt weiterhin die Aufgabe zugrunde, einen Elektromotor mit einer solchen Anschlussvorrichtung anzugeben. Der Erfindung liegt weiterhin die Aufgabe zugrunde, eine Verwendung einer solchen Anschlussvorrichtung zum Anschluss eines Elektromotors an eine 48V-Versorgungsspannung anzugeben.

Hinsichtlich der Anschlussvorrichtung wird die Aufgabe mit den Merkmalen des Anspruchs 1 und hinsichtlich des Elektromotors mit den Merkmalen des Anspruchs 9 sowie hinsichtlich der Verwendung mit den Merkmalen des Anspruchs 10 erfindungsgemäß gelöst. Vorteilhafte Ausgestaltungen und Weiterbildungen sind Gegenstand der jeweiligen Unteransprüche.

Die erfindungsgemäße Anschlussvorrichtung ist als ein elektrischer Motoranschluss oder eine Motorschnittstelle zum Anschluss eines Leitungssatzes an eine Leiterplatte einer in einem Motorträger eines Elektromotors angeordneten Motorelektronik geeignet und eingerichtet. Der Leitungssatz weist eine Anzahl oder Mehrzahl von Leitungen auf, welche beispielsweise in einem Bordnetzkabel zu der Anschlussvorrichtung geführt sind. Der Motorträger ist hierbei insbesondere ein an einem Motorgehäuse des Elektromotors befestigtes Gehäuseteil, welches mittels eines Deckels zu einem im Wesentlichen geschlossenen Elektronikgehäuse für die Motorelektronik abgedeckt oder abdeckbar ist. Der beispielsweise aus Aluminium gefertigte Motorträger weist hierbei geeigneterweise einen mit dem Motorgehäuse gekoppelten Motorträgerboden auf, welcher umfangsseitig von einer axial emporstehenden Gehäusewand eingefasst wird. Die Motorelektronik ist hierbei in dem durch den Motorträger und den Deckel eingefassten Gehäuseinnenraum oder Elektronikfach aufgenommen.

Die Anschlussvorrichtung weist einen Kontaktadapter mit einer der Anzahl der Leitungen entsprechenden Anzahl von Stromschienen und mit einem Umspritzungsgehäuse auf. Die Stromschienen sind hierbei gemeinsam in dem, insbesondere elektrisch isolierenden Umspritzungsgehäuse umspritzt eingebettet, und somit zueinander beabstandet sowie gegeneinander elektrisch isoliert geführt. Die Stromschienen weisen erste und zweite Anschlusskontakte auf. Die ersten, elektronikseitigen Anschlusskontakte ragen aus dem Umspritzungsgehäuse heraus und sind zur Kontaktierung mit der Leiterplatte vorgesehen. Die zweiten, leitungsseitigen Anschlusskontakte sind entsprechend zur Kontaktierung mit den Leiterenden der Leitungen des Leitungssatzes ausgebildet.

Die Anschlussvorrichtung weist weiterhin ein Anschlussgehäuse auf, welches aus einem ersten und zweiten Gehäuseteil zusammengesetzt ist. Die Gehäuseteile sind hierbei beispielsweise schalen- und deckelförmig ausgebildet und sind erfindungsgemäß im Montagezustand des Anschlussgehäuses unter Bildung eines Hohlraumes zusammengesetzt, beispielsweise miteinander verrastet. In dem Anschlussgehäuse sind die mit den Leiterenden kontaktierten zweiten Anschlusskontakte angeordnet, wobei das Anschlussgehäuse mit dem Umspritzungsgehäuse des Kontaktadapters gefügt ist. Dadurch ist eine besonders geeignete Anschlussvorrichtung realisiert.

Im Gegensatz zum Stand der Technik wird somit anstelle eines umspritzten Stanzgitters der Motorelektronik ein separater, also zusätzlicher, Kontaktadapter für die Anschlussvorrichtung verwendet. Die Funktionen einer Abdichtung zum Motorträger und Deckel - also dem Elektronikgehäuse - sowie einer Zugentlastung werden hierbei durch das als Ummantelung der Stromschienen ausgeführte Umspritzungsgehäuse des Kontaktadapters übernommen. Der Kontaktadapter ist somit ein von der Motorelektronik separates Bauteil. Dadurch wird der Einsatz von Leiterplatten für die elektronischen Bauteile der Motorelektronik ermöglicht oder zumindest wesentlich vereinfacht.

Die Verwendung von Leiterplatten für die Motorelektronik ist insbesondere vorteilhaft hinsichtlich der Flexibilität bei der Ausgestaltung und beim Aufbau der Elektronik. Beispielsweise ist somit ein Modul- oder Baukastensystem der Motorelektronik ermöglicht. Insbesondere ist es möglich, eine gleiche Anschlussvorrichtung für Elektromotoren und Motorelektroniken unterschiedlicher Leistungsklassen zu verwenden. Dadurch werden die Herstellungskosten sowie der Herstellungsaufwand im Zuge der Elektronikmontage reduziert. Des Weiteren wird durch die Leiterplatte eine besonders bauraumkompakte Motorelektronik ermöglicht, wodurch zusätzliche Freiheiten geschaffen werden.

Die mit dem Umspritzungsgehäuse umspritzten oder ummantelnden Stromschienen sind beispielsweise als Stanzbiegeteile in Form flacher Leiterbahnen ausgebildet. Das Umspritzungsgehäuse ist vorzugsweise aus einem thermisch stabilen Kunststoffmaterial hergestellt.

Durch das Anschlussgehäuse werden die zweiten Anschlusskontakte und die Leiterenden vor Temperaturschwankungen und Feuchtigkeit geschützt. Dadurch ist die Gefahr von Korrosionen an oder zwischen den zweiten Anschlusskontakten und den Leiterenden vorteilhaft vermieden.

In einer geeigneten Weiterbildung ragen die zweiten Anschlusskontakte der Stromschienen aus dem Umspritzungsgehäuse heraus. Dies bedeutet, dass die elektrisch leitende Verbindung zwischen den zweiten Anschlusskontakten und den jeweiligen Leiterenden nicht von einer Umspritzung umgeben sind, sondern im Wesentlichen freiliegend innerhalb des Anschlussgehäuses angeordnet sind. Dadurch wird die elektrische Kontaktierung der zweiten Anschlusskontakte mit den Leiterenden wesentlich vereinfacht.

Zur Verbesserung der mechanischen Stabilität, insbesondere hinsichtlich der Zugentlastung oder der Zugfestigkeit der Kontaktierung zwischen den Leiterenden und den zweiten Anschlusskontakten, ist es beispielsweise möglich, dass die Leitungen des Leitungssatzes von den Gehäuseteilen des Anschlussgehäuses geklemmt werden.

In einer zweckmäßigen Ausführung sind die zweiten Anschlusskontakte als Anschlussfahnen ausgebildet, welche mit den Leiterenden elektrisch leitend mittels einer Lötverbindung verbunden sind. Dadurch ist eine besondere aufwandsarme und kostengünstige Verbindung der Anschlussvorrichtung an das Bordnetzkabel realisiert. In einer alternativen Ausführungsform ist die Verbindung beispielsweise als eine Schweißverbindung oder als eine Verkrimpung ausgeführt.

In einer bevorzugten Ausgestaltung ist eine Kragenkontur des Umspritzungsgehäuses im Fügezustand des Anschlussgehäuses von den ersten und zweiten Gehäuseteilen formschlüssig umgriffen. Durch den Formschluss zwischen dem Anschlussgehäuse und dem Umspritzungsgehäuse wird die Zugentlastung der Anschlussvorrichtung verbessert.

In einer zweckmäßigen Ausbildung sind die ersten Anschlusskontakte der Stanzgitter als Pressfit-Kontakte für die Leiterplatte ausgeführt. Dadurch ist eine besonders aufwandsreduzierte Kontaktierung der Leiterplatte ermöglicht, was sich vorteilhaft auf die Elektronikmontage der Motorelektronik im Motorträger überträgt. In einer alternativen Ausbildungsform sind die ersten Anschlusskontakte beispielsweise als Schweißkontakte oder Lötkontakte ausgebildet.

In einer denkbaren Weiterbildung ist das Umspritzungsgehäuse des Kontaktadapters als eine die Gehäusewand des Motorträgers durchgreifende Wanddurchführung ausgebildet. Insbesondere weist die Gehäusewand hierbei eine Aussparung auf, in welche das Umspritzungsgehäuse eingesetzt ist. Das Umspritzungsgehäuse ist hierbei bevorzugterweise formschlüssig an der Gehäusewand und somit am Motorträger befestigt, sodass eine zuverlässige und betriebssichere Zugentlastung gewährleistet ist. Das Umspritzungsgehäuse dichtet hierbei vorzugsweise die Aussparung ab. Mit anderen Worten sind der Motorträger und der Deckel gegenüber dem Umspritzungsgehäuse abgedichtet. Hierbei ist es beispielsweise denkbar, dass der Kontaktbereich zwischen dem Umspritzungsgehäuse und dem Motorträger mit zusätzlichen Dichtmitteln versehen ist.

In einer bevorzugten Weiterbildungsform ist eine Klebeverbindung zwischen dem Umspritzungsgehäuse und dem Motorträger sowie dem Deckel als fluiddichte Abdichtung vorgesehen.

In einer besonders stabilen Ausführung der Anschlussvorrichtung ist das Umspritzungsgehäuse des Kontaktadapters mechanisch fest mit dem Motorträger gekoppelt oder koppelbar. Beispielsweise ist das Umspritzungsgehäuse hierbei mit dem Motorträger verschraubt. Dadurch ist eine besonders zugentlastende Anschlussvorrichtung realisiert.

Erfindungsgemäß ist der zwischen dem ersten Gehäuseteil und dem zweiten Gehäuseteil eingeschlossene Hohlraum des Anschlussgehäuses mit einer ausgehärteten Vergussmasse gefüllt. Das Anschlussgehäuse weist hierbei zweckmäßigerweise eine in den Hohlraum mündende Füllöffnung auf, durch welche die aushärtbare Vergussmasse im Fügezustand des Anschlussgehäuses eingefüllt wird. Anschließend wird die Vergussmasse ausgehärtet, sodass die ausgehärtete Vergussmasse die zweiten Anschlusskontakte und Leiterenden umschließt. Dadurch werden die zweiten Anschlusskontakte und Leiterenden mechanisch stabilisiert, wodurch die Zugentlastung der Anschlussvorrichtung verbessert wird. Erfindungsgemäß sind die zweiten Anschlusskontakte und die Leiterenden in der ausgehärteten Vergussmasse elektrisch isoliert und abgedichtet.

In einer möglichen Ausbildungsform wird als Vergussmasse ein Werkstoff mit guten Adhäsionseigenschaften, wie beispielsweise Silikon oder Polyurethan (PUR), verwendet.

In einer zweckmäßigen Ausführung weist der Leitungssatz mindestens drei, insbesondere mindestens vier, insbesondere mindestens fünf Leitungen auf.

Der erfindungsgemäße Elektromotor ist insbesondere als ein elektrischer Kühlerlüftermotor eines Kraftfahrzeugs ausgeführt. Der Elektromotor ist hierbei beispielsweise als ein Außenläufer ausgeführt, und mittels eines Motorträgers an einer gewünschten Einbauposition befestigt. Der Motorträger nimmt hierbei eine Motorelektronik auf, welche mittels einer vorstehend beschriebenen Anschlussvorrichtung an ein Kraftfahrzeug-Bordnetz angeschlossen oder anschließbar ist. Dadurch ist ein besonders geeigneter Elektromotor realisiert. Insbesondere ist durch die Anschlussvorrichtung ein besonders zuverlässiger und betriebssicherer Motorbetrieb ermöglicht.

Ein anderer oder weiterer Aspekt der Erfindung sieht eine Verwendung einer vorstehend beschriebenen Anschlussvorrichtung zum Anschluss eines Elektromotors an eine 48V-Versorgungsspannung vor. Dadurch ist eine besonders betriebssichere und zuverlässige Kontaktierung des Elektromotors an die 48V-Versorgungsspannung realisiert. Die Anschlussvorrichtung ist somit insbesondere dafür geeignet und eingerichtet den Elektromotor an ein 48V-Bordnetz (Gleichspannung, DC) eines Kraftfahrzeugs anzuschließen.

Nachfolgend sind Ausführungsbeispiele der Erfindung anhand einer Zeichnung näher erläutert. Darin zeigen:
- Fig. 1: in perspektivischer Darstellung einen Kühlerlüfterantrieb für ein Kraftfahrzeug mit integrierter Umrichterelektronik mit Blick auf eine Anschlussvorrichtung eines Elektromotors,
- Fig. 2: in perspektivischer Darstellung ausschnittsweise eine Motorelektronik im Bereich der Anschlussvorrichtung in einer ersten Ausführungsform,
- Fig. 3: in perspektivischer Darstellung ausschnittsweise eine Motorelektronik im Bereich der Anschlussvorrichtung in einer zweiten Ausführungsform, und
- Fig. 4: in perspektivischer Darstellung ausschnittsweise eine Motorelektronik mit einer teilweise auseinandergenommenen Anschlussvorrichtung in einer dritten Ausführungsform.

Einander entsprechende Teile und Größen sind in allen Figuren stets mit den gleichen Bezugszeichen versehen.

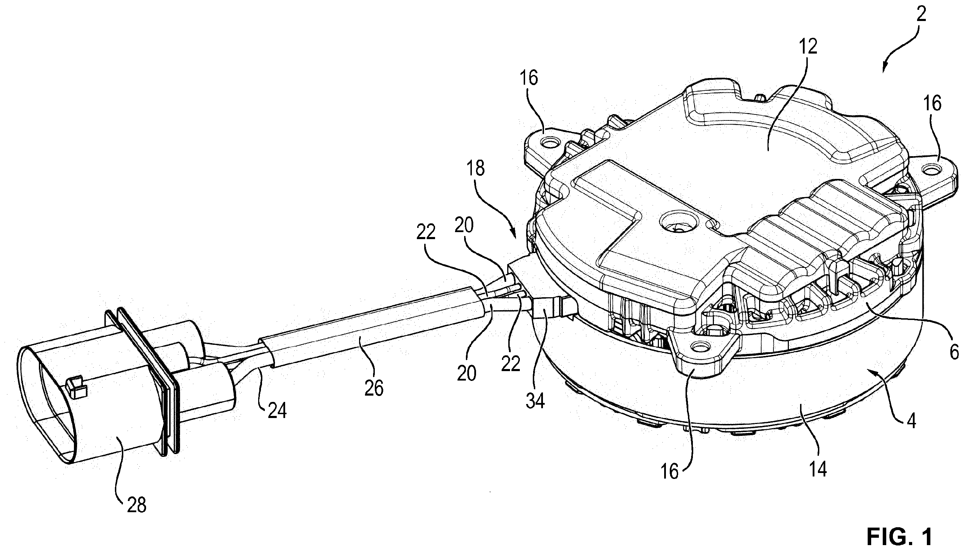

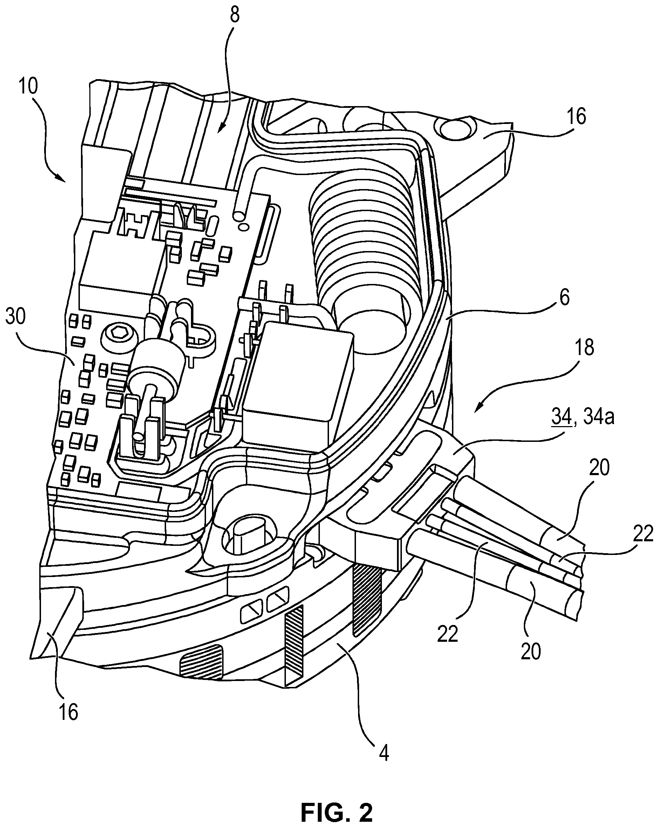

In der Fig. 1 ist ein Elektromotor 2 eines Lüfters für den Kühler eines Kraftfahrzeugs gezeigt. Der Elektromotor 2 weist einen Stator 4 auf, welcher beispielsweise mit einer dreiphasigen Drehfeldwicklung in Form von Spulen bewickelt ist. Der Elektromotor 2 weist weiterhin einen nicht näher dargestellten, permanent erregbaren, Rotor auf, welcher im Inneren des Stators 4 drehbar um eine Motorachse gelagert ist. An einer Stirnseite des Stators 4 ist ein etwa scheibenförmiger Motorträger 6 angeordnet, in welchen ein Elektronikfach 8 (Fig. 2) eingebracht ist, in das eine Motorelektronik 10 eingesetzt ist. Zum Schutz vor äußeren Einflüssen ist das Elektronikfach 8 im Montagezustand mit einem (Gehäusefach-)Deckel (Elektronikfachdeckel) 12 dichtend verschlossen.

Der Stator 4 ist aus einem Blechpaket gebildet, welches mit einem Kunststoffmantel 14 umspritzt ist. Der Motorträger 6 ist insbesondere als ein einstückiges Druckgussteil aus einem Aluminiummaterial hergestellt. Der Deckel 12 ist in diesem Ausführungsbeispiel als ein Spritzgussteil aus Kunststoff ausgeführt. Die Befestigung des Elektromotors 2 und damit des gesamten Lüfters am Kraftfahrzeug erfolgt hierbei über den Motorträger 6, welcher hierfür drei umfangsseitig verteilt angeordnete und dem Außenumfang abstehende Schraublaschen 16 aufweist.

Der Elektromotor 2 weist eine Anschlussvorrichtung 18 auf, mittels welcher die im Elektronikfach 8 aufgenommene Motorelektronik 10 an Leitungen 20, 22 eines Leitungssatzes 24 eines Bordnetzkabels 26 angeschlossen ist. Der Leitungssatz 24 umfasst in diesem Ausführungsbeispiel zwei Versorgungsleitungen 20 sowie zwei Signal- oder Steuerleitungen 22. Bedingt durch die notwendige Stromtragfähigkeit weisen die Versorgungsleitungen 20 im Verhältnis zu den Signal- oder Steuerleitungen 22 einen vergleichsweise großen Leitungsdurchmesser auf. Das Bordnetzkabel 26 ist an einem dem Elektromotor 2 abgewandten Kabelende mit einem Steckverbinder 28 zum Anschluss an ein Kraftfahrzeug-Bordnetz ausgestattet. Das Kraftfahrzeug-Bordnetz ist hierbei beispielweise als ein 24V- oder 48V-Bordnetz (Gleichspannung, DC) ausgeführt.

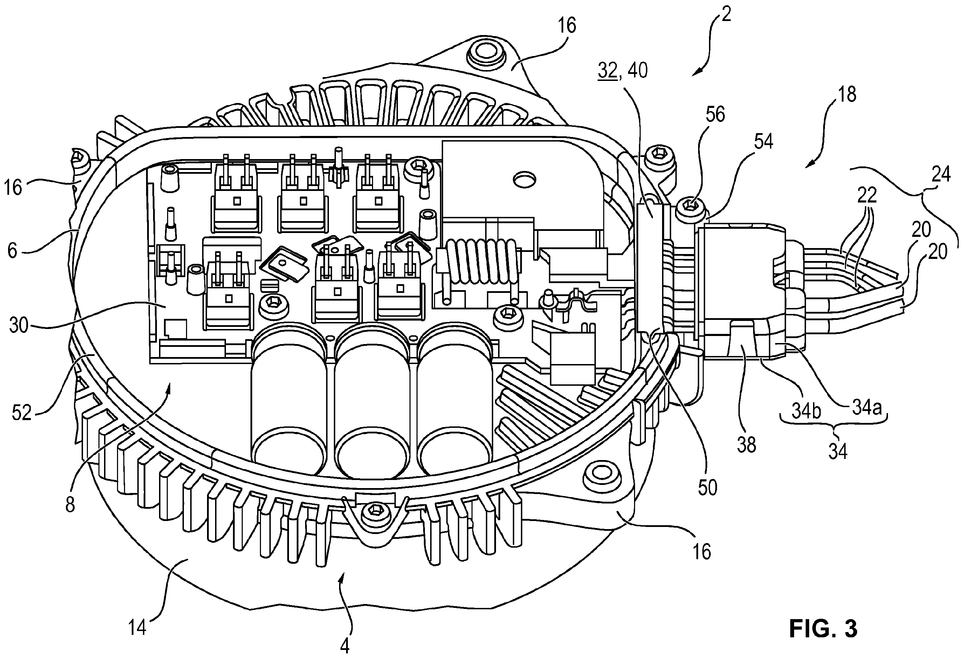

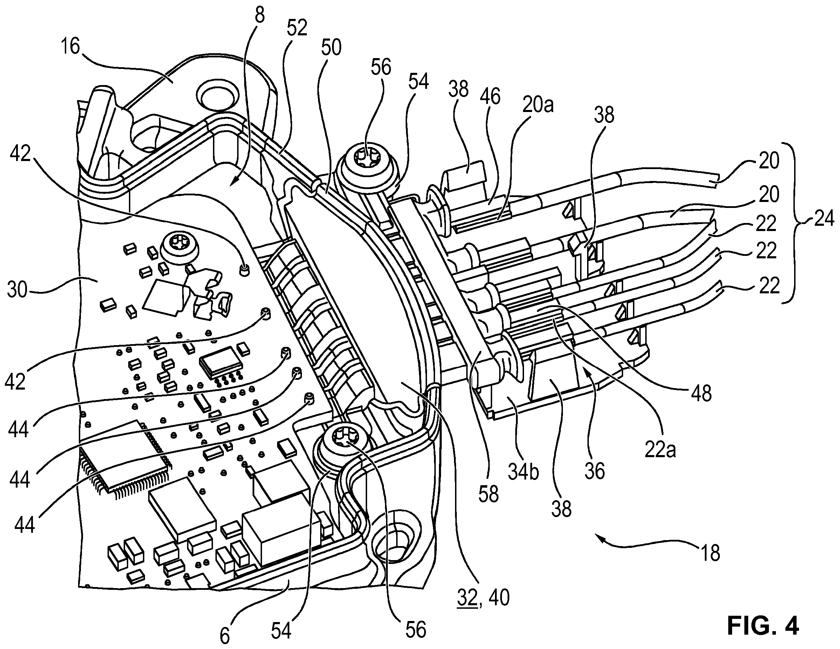

In den Figuren 2 bis 4 sind unterschiedliche Ausführungsbeispiele der Motorelektronik 10 und der jeweiligen Anschlussvorrichtung 18 bei einem abgenommenen Deckel 12 dargestellt. In den Ausführungsbeispielen der Fig. 3 und der Fig. 4 weisen die Leitungssätze 24 jeweils zwei Versorgungsleitungen 20 und drei Steuer- oder Signalleitungen 22 auf. Die Motorelektronik 10 weist hierbei insbesondere stets eine Leiterplatte 30 auf, auf welcher elektronische Bauteile einer nicht näher bezeichneten Wechselrichterschaltung angeordnet sind. In dem Ausführungsbeispiel der Fig. 2 ist die Anschlussvorrichtung 18 zwischen dem Stator 4 und dem Motorträger 6 angeordnet.

Die Figuren 2 bis 4 zeigen in perspektivischer Ansicht die in dem Elektronikfach 8 angeordnete Motorelektronik 10 mit Blick auf die Anschlussvorrichtung 18. Die Anschlussvorrichtung 18 bildet hierbei im Wesentlichen eine elektrische Motorschnittstelle oder einen Motoranschluss zwischen der Motorelektronik 10 und dem Bordnetzkabel 26. Im Kühlerlüfterbetrieb wird der Elektromotor 2 über die in nicht näher dargestellter Art und Weise mit einem Fahrzeug-Energiespeicher (Fahrzeugbatterie) verbundenen Versorgungsleitungen 20 mit einem Gleichstrom gespeist. Die Steuer- oder Signalleitungen 22 dienen zur Steuerung des Elektromotors 2 beziehungsweise zum Datenaustausch der Motorelektronik 10 und einer Kraftfahrzeugelektronik. Beispielsweise werden im Kühlerlüfterbetrieb über die Steuer- oder Signalleitungen 22 Steuerbefehle von der Kraftfahrzeugelektronik an den Elektromotor 2 beziehungsweise Betriebsinformationen des Elektromotors 2, wie beispielsweise die (Motor-)Drehzahl, an die Kraftfahrzeugelektronik übermittelt.

Der Aufbau der Anschlussvorrichtung 18 ist nachfolgend insbesondere anhand der Fig. 4 erläutert.

Die Anschlussvorrichtung 18 weist einen Kontaktadapter 32 und ein damit gekoppeltes Anschlussgehäuse 34 auf. Das Anschlussgehäuse 34 ist aus einem ersten, etwa schalenartigen Gehäuseteil 34a und einem zweiten, etwa deckel- oder bodenartigen Gehäuseteil 34b unter Ausbildung eines Hohlraums 36 zusammengesetzt. Die Gehäuseteile 34a, 34b, und somit das Anschlussgehäuse 34, sind als Spritzgussteile aus Kunststoff hergestellt. Das Gehäuseteil 34b weist drei Rastzungen 38 auf, welche bei einem Fügen der Gehäuseteile 34a, 34b mit entsprechenden Rastaufnahmen des Gehäuseteils 34a verrasten.

Der Kontaktadapter 32 weist ein Umspritzungsgehäuse 40 aus einem isolierenden Kunststoffmaterial auf. In dem Umspritzungsgehäuse 40 sind eine Anzahl von Stromschienen eingebettet, welche als Einlegeteile mit dem Kunststoffmaterial des Umspritzungsgehäuses 40 umspritzt sind. Die Anzahl der Stromschienen entspricht der Anzahl der Leitungen 20, 22 des Leitungssatzes 24. In dem dargestellten Ausführungsbeispiel sind somit fünf Stromschienen für die fünf Leitungen 20, 22 des Leitungssatzes 24 vorgesehen. Die Stromschienen sind hierbei lediglich anhand von aus dem Umspritzungsgehäuse 40 herausragenden Stromschienenenden 42, 44, 46, 48, welche nachfolgend auch als erste Anschlusskontakte 42, 44 und zweite Anschlusskontakte 46, 48 bezeichnet sind, mit Bezugszeichen versehen. Die Stromschienen sind hierbei als flachleiterartige Leiterbahnen mittels eines Stanz-Biege-Prozesses hergestellt.

Die als flache Anschlussfahnen ausgebildeten Anschlusskontakte 46, 48 sind aus der bordnetzkabelseitigen Stirnseite des Umspritzungsgehäuses 40 herausgeführt und ragen somit zumindest abschnittsweise in den Hohlraum 36 des Anschlussgehäuses 34 hinein. In dem dargestellten Ausführungsbeispiel sind zwei Stromschienen mittels den Anschlusskontakten 46 an eine jeweilige Versorgungsleitung 20 kontaktiert und drei Stromschienen mittels der Anschlusskontakte 48 an die Signal- oder Steuerleitungen 22 geführt. Zur elektrisch leitenden Verbindung sind die leitenden Adern der Leitungen 20, 22 an den jeweiligen Leiterenden 20a, 22a freigelegt und mit den jeweiligen Anschlusskontakten 46, 48 verlötet oder verschweißt. Die Leiterenden 20a, 22a und die Anschlusskontakte 46, 48 sind in der Fig. 4 lediglich beispielhaft mit Bezugszeichen versehen.

Die elektronikfachseitigen Anschlusskontakte 42, 44 des Kontaktadapters 32 sind in dem dargestellten Ausführungsbeispiel der Fig. 4 als Pressfit-Kontakte ausgebildet, und elektrisch leitend mit der Leiterplatte 30 steckkontaktiert. Die den Anschlusskontakten 46 zugeordneten Anschlusskontakte 42 sind hierbei beispielsweise an einen Zwischenkreis der Leiterplatte 30 geführt, wobei die den Anschlusskontakten 48 zugeordneten Anschlusskontakte 44 an einen Controller oder ein Steuergerät der Motorelektronik 10 geführt sind.

Die das Elektronikfach 8 umgreifende Gehäusewand des Motorträgers 6 weist im Montagebereich der Anschlussvorrichtung 18 eine nicht näher bezeichnete Aussparung oder Aufnahme auf, in welche das Umspritzungsgehäuse 40 nach Art einer Wanddurchführung eingesetzt ist. Das Umspritzungsgehäuse 40 ist hierbei bündig und dichtend in die Aussparung des Motorträgers 6 eingesetzt. Das Umspritzungsgehäuse 40 weist hierbei einen emporstehenden Dichtkragen 50 auf, welcher mit einem umfangsseitig verlaufenden, axialen Dichtrand 52 des Motorträgers 6 bündig fluchtet. Der Dichtkragen 50 und der Dichtrand 52 dienen hierbei der insbesondere fluiddichten Abdichtung gegenüber dem Deckel 12. Der Dichtrand 52 ist hierbei beispielsweise auch als eine Klebeverbindung ausführbar. Im Montagezustand ist das Elektronikfach 8 somit zuverlässig und betriebssicher gegen den Deckel 12 abgedichtet, sodass die darin aufgenommene Motorelektronik 10 gegen äußere Einflüsse sicher geschützt ist.

Das Umspritzungsgehäuse 40 weist angeformte Befestigungslaschen 54 zur mechanischen Fixierung des Kontaktadapters 32 - und somit der Anschlussvorrichtung 18 - am Motorträger 6 auf. Wie in dem Ausführungsbeispiel der Fig. 3 und Fig. 4 deutlich wird, ist das Umspritzungsgehäuse 40 an den Befestigungslaschen 54 jeweils mittels einer Befestigungsschraube 56 mechanisch sicher an den Motorträger 6 befestigt. In dem Ausführungsbeispiel der Fig. 3 weist das Umspritzungsgehäuse 40 eine Befestigungslasche 54 und in dem Ausführungsbeispiel der Fig. 4 zwei Befestigungslaschen 54 auf.

Das Umspritzungsgehäuse 40 weist weiterhin eine zwischen dem Dichtkragen 50 und den Anschlusskontakten 46, 48 angeordneten, Kragen- oder Formschlusskontur 58 auf. Die Kragenkontur 58 ist einteilig, also einstückig oder monolithisch, an den Körper des Umspritzungsgehäuses 40 emporstehend angeformt. Im Montage- oder Fügezustand der Anschlussvorrichtung 18 wird die Kragenkontur 58 von den Gehäuseteilen 34a, 34b des Anschlussgehäuses 34 formschlüssig umgriffen, sodass das Anschlussgehäuse 34 sicher an dem Kontaktadapter 32 befestigt ist.

Die in den Figuren 3 und 4 dargestellte Anschlussvorrichtung 18 ist insbesondere für den Anschluss des Elektromotors 2 oder dessen Motorelektronik 10 an eine 48V-Versorgungsspannung eines Kraftfahrzeug-Bordnetzes, also insbesondere an ein 48V-Bordnetz, geeignet und eingerichtet. Die Versorgungsleitungen 20 sind hierbei beispielsweise als zwei Power-Leitungen ausgebildet.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den Ausführungsbeispielen beschriebenen Einzelmerkmale auch auf andere Weise miteinander kombinierbar, ohne den Gegenstand der Erfindung zu verlassen.

So ist es beispielsweise denkbar, dass der Hohlraum 36 des Anschlussgehäuses 34 mit einer ausgehärteten oder aushärtbaren Vergussmasse gefüllt ist. Im ausgehärteten Zustand der Vergussmasse sind die Anschlusskontakte 46, 48 und Leiterenden 20a, 22a betriebssicher, zugfest, elektrisch isolierend sowie fluiddicht eingebettet.

### Bezugszeichenliste

- 2: Elektromotor
- 4: Stator
- 6: Motorträger
- 8: Elektronikfach
- 10: Motorelektronik
- 12: Deckel
- 14: Kunststoffmantel
- 16: Schraublaschen
- 18: Anschlussvorrichtung
- 20: Leitung/Versorgungsleitung
- 20a: Leiterende
- 22: Leitung/Signal- oder Steuerleitung
- 22a: Leiterende
- 24: Leitungssatz
- 26: Bordnetzkabel
- 28: Steckverbinder
- 30: Leiterplatte
- 32: Kontaktadapter
- 34: Anschlussgehäuse
- 34a, 34b: Gehäuseteil
- 36: Hohlraum
- 38: Rastzunge
- 40: Umspritzungsgehäuse
- 42, 44: Anschlusskontakt
- 46, 48: Anschlusskontakt
- 50: Dichtkragen
- 52: Dichtrand
- 54: Befestigungslasche
- 56: Befestigungsschraube
- 58: Kragenkontur

## Patentansprüche

1. Anschlussvorrichtung (18) zum Anschluss eines Leitungssatzes (24) mit einer Mehrzahl von Leitungen (20, 22) an eine Leiterplatte (30) einer in einem Motorträger (6) eines Elektromotors (2) angeordneten Motorelektronik (10), aufweisend
- einen Kontaktadapter (32) mit einer der Leitungen (20, 22) entsprechenden Anzahl von Stromschienen und mit einem Umspritzungsgehäuse (40) aus einem isolierenden Kunststoffmaterial, in welchem die Stromschienen gemeinsam mit dem Kunststoffmaterial des Umspritzungsgehäuses (40) gemeinsam umspritzt eingebettet sind, wobei die Stromschienen aus dem Umspritzungsgehäuse (40) herausragende erste Anschlusskontakte (42, 44) zur Kontaktierung mit der Leiterplatte (30) und zweite Anschlusskontakte (46, 48) zur Kontaktierung mit den Leiterenden (20a, 22a) der Leitungen (20, 22) aufweisen, und
- ein ein erstes Gehäuseteil (34a) und ein zweites Gehäuseteil (34b) aufweisendes Anschlussgehäuse (34), welches die mit den Leiterenden (20a, 22a) kontaktierten zweiten Anschlusskontakte (46, 48) umgibt und mit dem Umspritzungsgehäuse (40) des Kontaktadapters (32) gefügt ist,
**dadurch gekennzeichnet,**
**dass** im Montagezustand des Anschlussgehäuses (34) ein zwischen dem ersten Gehäuseteil (34a) und dem zweiten Gehäuseteil (34b) eingeschlossener Hohlraum (36) des Anschlussgehäuses (34) mit einer im Fügezustand des Anschlussgehäuses (34) aushärtbar eingefüllten und anschließend ausgehärteten Vergussmasse gefüllt ist, sodass die ausgehärtete Vergussmasse die zweiten Anschlusskontakte (46, 48) und Leiterenden (20a, 22a) umschließt, wodurch diese elektrisch isoliert und abgedichtet werden.

2. Anschlussvorrichtung (18) nach Anspruch 1,
**dadurch gekennzeichnet,**
**dass** die zweiten Anschlusskontakte (46, 48) aus dem Umspritzungsgehäuse (40) herausragen.

3. Anschlussvorrichtung (18) nach Anspruch 1 oder 2,
**dadurch gekennzeichnet,**
**dass** die zweiten Anschlusskontakte (46, 48) als Anschlussfahnen ausgeführt sind, welche mit den Leiterenden (20a, 22a) lötverbunden sind.

4. Anschlussvorrichtung (18) nach einem der Ansprüche 1 bis 3,
**dadurch gekennzeichnet,**
**dass** im Fügezustand des Anschlussgehäuses (34) die ersten und zweiten Gehäuseteile (34a, 34b) eine Kragenkontur (58) des Umspritzungsgehäuses (40) formschlüssig umgreifen.

5. Anschlussvorrichtung (18) nach einem der Ansprüche 1 bis 4,
**dadurch gekennzeichnet,**
**dass** die ersten Anschlusskontakte (42, 44) als Pressfit-Kontakte für die Leiterplatte (30) ausgeführt sind.

6. Anschlussvorrichtung (18) nach einem der Ansprüche 1 bis 5,
**dadurch gekennzeichnet,**
**dass** das Umspritzungsgehäuse (40) eine Gehäusewand des Motorträgers (6) durchgreift.

7. Anschlussvorrichtung (18) nach einem der Ansprüche 1 bis 6,
**dadurch gekennzeichnet,**
**dass** das Umspritzungsgehäuse (40) mechanisch fest mit dem Motorträger (6) gekoppelt ist.

8. Anschlussvorrichtung (18) nach einem der Ansprüche 1 bis 7,
**dadurch gekennzeichnet,**
**dass** der Leitungssatz (24) mindestens drei, insbesondere mindestens vier, insbesondere mindestens fünf Leitungen (20, 22) aufweist.

9. Elektromotor (2), insbesondere elektrischer Kühlerlüftermotor eines Kraftfahrzeugs, mit einem Motorträger (6) mit einer darin angeordneten Motorelektronik (10) und mit einer Anschlussvorrichtung (18) nach einem der Ansprüche 1 bis 8.

10. Verwendung einer Anschlussvorrichtung (18) nach einem der Ansprüche 1 bis 8 zum Anschluss eines Elektromotors (2) an eine 48V-Versorgungsspannung.

## Claims

1. Connection device (18) for connecting a set of lines (24) with a plurality of lines (20, 22) to a printed circuit board (30) of motor electronics (10) arranged in a motor carrier (6) of an electric motor (2), having
- a contact adapter (32) with a number of busbars corresponding to the lines (20, 22) and with an overmolded housing (40) made of an insulating plastic material, in which the busbars are embedded together with the plastic material of the overmolded housing (40) by overmolding, wherein the busbars have first connection contacts (42, 44) projecting from the overmolded housing (40) for contacting the printed circuit board (30) and second connection contacts (46, 48) for contacting the conductor ends (20a, 22a) of the lines (20, 22), and
- a connection housing (34) having a first housing part (34a) and a second housing part (34b), said connection housing (34) surrounding the second connection contacts (46, 48) in contact with the conductor ends (20a, 22a) and being joined to the overmolded housing (40) of the contact adapter (32),
**characterized in**
**that**, in the assembled state of the connection housing (34), a cavity (36) of the connection housing (34) enclosed between the first housing part (34a) and the second housing part (34b) is filled with a potting compound, which is filled in a curable manner in the joined state of the connection housing (34) and is subsequently cured, so that the cured potting compound encloses the second connection contacts (46, 48) and conductor ends (20a, 22a), thereby electrically insulating and sealing them.

2. Connection device (18) according to claim 1,
**characterized in**
**that** the second connection contacts (46, 48) project from the overmolded housing (40).

3. Connection device (18) according to claim 1 or 2,
**characterized in**
**that** the second connection contacts (46, 48) are designed as connection lugs, which are soldered to the conductor ends (20a, 22a).

4. Connection device (18) according to one of claims 1 to 3,
**characterized in**
**that**, in the joined state of the connection housing (34), the first and second housing parts (34a, 34b) engage positively around a collar contour (58) of the overmolded housing (40).

5. Connection device (18) according to one of claims 1 to 4,
**characterized in**
**that** the first connection contacts (42, 44) are designed as press-fit contacts for the printed circuit board (30).

6. Connection device (18) according to one of claims 1 to 5,
**characterized in**
**that** the overmolded housing (40) extends through a housing wall of the motor mount (6).

7. Connection device (18) according to one of claims 1 to 6,
**characterized in**
**that** the overmolded housing (40) is mechanically fixedly coupled to the motor mount (6).

8. Connection device (18) according to one of claims 1 to 7,
**characterized in**
**that** the set of lines (24) has at least three, in particular at least four, in particular at least five lines (20, 22).

9. Electric motor (2), in particular electric cooling fan motor of a motor vehicle, with a motor mount (6) with motor electronics (10) arranged therein and with a connection device (18) according to one of claims 1 to 8.

10. Use of a connection device (18) according to one of claims 1 to 8 for connecting an electric motor (2) to a 48 V supply voltage.

## Revendications

1. Dispositif de raccordement (18) pour le raccordement d'un ensemble de lignes (24) avec une pluralité de lignes (20, 22) à un circuit imprimé (30) d'une électronique de moteur (10) disposée dans un support de moteur (6) d'un moteur électrique (2), comprenant
- un adaptateur de contact (32) avec un nombre de barres conductrices correspondant aux lignes (20, 22) et avec un boîtier de surmoulage (40) d'un matière plastique isolante, dans lequel les barres conductrices sont incorporées par surmoulage conjointement avec la matière plastique du boîtier de surmoulage (40), dans lequel les barres conductrices comprennent des premiers contacts de raccordement (42, 44) dépassant du boîtier surmoulé (40) pour la mise en contact avec le circuit imprimé (30) et des deuxièmes contacts de raccordement (46, 48) pour la mise en contact avec les extrémités de conducteur (20a, 22a) des lignes (20, 22), et
- un boîtier de raccordement (34) comprenant une première partie de boîtier (34a) et une deuxième partie de boîtier (34b), qui entoure les deuxièmes contacts de raccordement (46, 48) mis en contact avec les extrémités de conducteur (20a, 22a) et qui est assemblé avec le boîtier de surmoulage (40) de l'adaptateur de contact (32),
**caractérisé en ce**
**que**, à l'état assemblé du boîtier de raccordement (34), un espace creux (36) du boîtier de raccordement (34) enfermé entre la première partie de boîtier (34a) et la deuxième partie de boîtier (34b) est rempli d'une masse de scellement remplie de manière à pouvoir durcir à l'état d'assemblage du boîtier de raccordement (34) et ensuite durcie, de sorte que la masse de scellement durcie entoure les deuxièmes contacts de raccordement (46, 48) et les extrémités de conducteur (20a, 22a), ce qui permet de les isoler électriquement et de les rendre étanches.

2. Dispositif de raccordement (18) selon la revendication 1,
**caractérisé en ce**
**que** les deuxièmes contacts de raccordement (46, 48) dépassent du boîtier de surmoulage (40).

3. Dispositif de raccordement (18) selon la revendication 1 ou 2,
**caractérisé en ce**
**que** les deuxièmes contacts de raccordement (46, 48) sont réalisés sous forme de languettes de raccordement, qui sont reliées par brasage aux extrémités des conducteur (20a, 22a).

4. Dispositif de raccordement (18) selon l'une des revendications 1 à 3,
**caractérisé en ce**
**que**, à l'état assemblé du boîtier de raccordement (34), les première et deuxième parties de boîtier (34a, 34b) entourent par engagement positif un contour de collerette (58) du boîtier de surmoulage (40).

5. Dispositif de raccordement (18) selon l'une des revendications 1 à 4,
**caractérisé en ce**
**que** les premiers contacts de raccordement (42, 44) sont réalisés sous forme de contacts press-fit pour le circuit imprimé (30).

6. Dispositif de raccordement (18) selon l'une des revendications 1 à 5,
**caractérisé en ce**
**que** le boîtier de surmoulage (40) traverse une paroi de boîtier du support de moteur (6).

7. Dispositif de raccordement (18) selon l'une des revendications 1 à 6,
**caractérisé en ce**
**que** le boîtier de surmoulage (40) est couplé mécaniquement de manière fixe au support de moteur (6).

8. Dispositif de raccordement (18) selon l'une des revendications 1 à 7,
**caractérisé en ce**
**que** l'ensemble de lignes (24) comprend au moins trois, notamment au moins quatre, notamment au moins cinq lignes (20, 22).

9. Moteur électrique (2), notamment moteur de ventilateur de radiateur d'un véhicule automobile, avec un support de moteur (6), dans lequel est disposée une électronique moteur (10), et avec un dispositif de raccordement (18) selon l'une des revendications 1 à 8.

10. Utilisation d'un dispositif de raccordement (18) selon l'une des revendications 1 à 8 pour le raccordement d'un moteur électrique (2) à une tension d'alimentation de 48 V.
